(19) Europäisches Patentamt
European Patent Office
Office européen des brevets

(11) **EP 1 518 096 B1**

(12) **EUROPEAN PATENT SPECIFICATION**

(45) Date of publication and mention
of the grant of the patent:
**23.04.2014 Bulletin 2014/17**

(51) Int Cl.:
***G10L 25/69*** *(2013.01)*

(21) Application number: **03762154.7**

(22) Date of filing: **27.06.2003**

(86) International application number:
**PCT/US2003/020354**

(87) International publication number:
**WO 2004/003499 (08.01.2004 Gazette 2004/02)**

(54) **COMPENSATION FOR UTTERANCE DEPENDENT ARTICULATION FOR SPEECH QUALITY ASSESSMENT**

ÄUSSERUNGSABHÄNGIGE-AUSSPRACHEKOMPENSATION FÜR SPRACHQUALITÄTSBEWERTUNG

COMPENSATION DESTINEE A L'ARTICULATION DEPENDANTE DE L'ENONCIATION POUR L'EVALUATION DE LA QUALITE VOCALE

(84) Designated Contracting States:
**DE FI FR GB SE**

(30) Priority: **01.07.2002 US 186862**

(43) Date of publication of application:
**30.03.2005 Bulletin 2005/13**

(73) Proprietor: **Alcatel Lucent**
**75007 Paris (FR)**

(72) Inventor: **KIM, Doh-Suk**
**Basking Ridge, NJ 07920 (US)**

(74) Representative: **Wetzel, Emmanuelle et al**
**Alcatel Lucent**
**Intellectual Property & Standards**
**70430 Stuttgart (DE)**

(56) References cited:
**EP-A- 1 187 100    US-A- 4 352 182**
**US-A- 5 794 188**

**Description**

Field of the Invention

The present invention relates generally to communications systems and, in particular, to speech quality assessment.

Background of the Related Art

Performance of a wireless communication system can be measured, among other things, in terms of speech quality. In the current art, there are two techniques of speech quality assessment. The first technique is a subjective technique (hereinafter referred to as "subjective speech quality assessment"). In subjective speech quality assessment, human listeners are used to rate the speech quality of processed speech, wherein processed speech is a transmitted speech signal which has been processed at the receiver. This technique is subjective because it is based on the perception of the individual human, and human assessment of speech quality typically takes into account phonetic contents, speaking styles or individual speaker differences. Subjective speech quality assessment can be expensive and time consuming.

The second technique is an objective technique (hereinafter referred to as "objective speech quality assessment"). Objective speech quality assessment is not based on the perception of the individual human. Most objective speech quality assessment techniques are based on known source speech or reconstructed source speech estimated from processed speech. However, these objective techniques do not account for phonetic contents, speaking styles or individual speaker differences.

Accordingly, there exists a need for assessing speech quality objectively which takes into account phonetic contents, speaking styles or individual speaker differences.

EP 1187 100 A1 discloses a method for objective speech quality assessment without reference signal.

US 4,352,182 discloses a method for testing the quality of digital speech-transmission equipment.

Summary of the Invention

The present invention is a method for objective speech quality assessment that accounts for phonetic contents, speaking styles or individual speaker differences by distorting speech signals under speech quality assessment. By using a distorted version of a speech signal, it is possible to compensate for different phonetic contents, different individual speakers and different speaking styles when assessing speech quality. The amount of degradation in the objective speech quality assessment by distorting the speech signal is maintained similarly for different speech signals, especially when the amount of distortion of the distorted version of speech signal is severe. Objective speech quality assessment for the distorted speech signal and the original undistorted speech signal are compared to obtain a speech quality assessment compensated for utterance dependent articulation. In one embodiment, the comparison corresponds to a difference between the objective speech quality assessments for the distorted and undistorted speech signals.

Brief Description of the Drawings

The features, aspects, and advantages of the present invention will become better understood with regard to the following description, appended claims, and accompanying drawings where:

Fig. 1 depicts an objective speech quality assessment arrangement which compensates for utterance dependent articulation in accordance with the present invention;
Fig. 2 depicts an embodiment of an objective speech quality assessment module employing an auditory-articulatory analysis module in accordance with the present invention.;
Fig. 3 depicts a flowchart for processing, in an articulatory analysis module, the plurality of envelopes $a_i(t)$ in accordance with one embodiment of the invention; and
Fig. 4 depicts an example illustrating a modulation spectrum $A_i(m,f)$ in terms of power versus frequency.

Detailed Description

The present invention is a method for objective speech quality assessment that accounts for phonetic contents, speaking styles or individual speaker differences by distorting processed speech. Objective speech quality assessment tend to yield different values for different speech signals which have same subjective speech quality scores. The reason these values differ is because of different distributions of spectral contents in the modulation spectral domain. By using a distorted version of a processed speech signal, it is possible to compensate for different phonetic contents, different individual speakers and different speaking styles. The amount of degradation in the objective speech quality assessment by distorting the speech signal is maintained similarly for different speech signals, especially when the distortion is severe. Objective speech quality assessment for the distorted speech signal and the original undistorted speech signal are compared to obtain a speech quality assessment compensated for utterance dependent articulation.

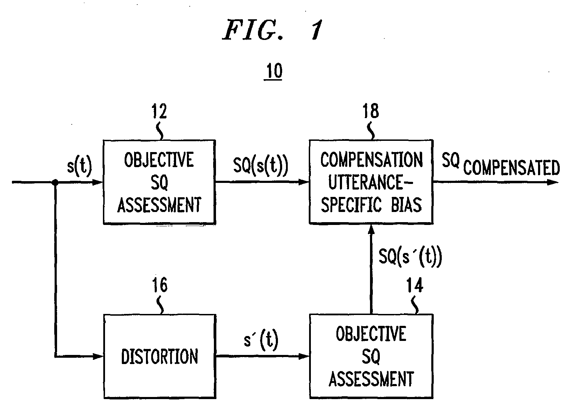

Fig. 1 depicts an objective speech quality assessment arrangement 10 which compensates for utterance dependent articulation in accordance with the present invention. Objective speech quality assessment arrangement 10 comprises a plurality of objective speech quality assessment modules 12, 14, a distortion module 16 and a compensation utterance-specific bias module 18. Speech signal s(t) is provided as inputs to distortion module 16 and objective speech quality assessment module 12. In distortion module 16, speech signal s(t) is distorted to produce a modulated noise reference unit (MNRU) speech signal s'(t). In other words, distortion module 16 produces a noisy version of input signal s(t). MNRU speech signal s'(t) is then provided as input to objective speech quality assessment module 14.

In objective speech quality assessment modules 12, 14, speech signal s(t) and MNRU speech signal s'(t) are processed to obtain objective speech quality assessments SQ(s(t) and SQ(s'(t)). Objective speech quality assessment modules 12, 14 are essentially identical in terms of the type of processing performed to any input speech signals. That is, if both objective speech quality assessment modules 12, 14 receive the same input speech signal, the output signals of both modules 12, 14 would be approximately identical. Note that, in other embodiments, objective speech quality assessment modules 12, 14 may process speech signals s(t) and s'(t) in a manner different from each other. Objective speech quality assessment modules are well-known in the art. An example of such a module will be described later herein.

Objective speech quality assessments SQ(s(t) and SQ(s'(t)) are then compared to obtain speech quality assessment $SQ_{compensated}$, which compensates for utterance dependent articulation. In one embodiment, speech quality assessment $SQ_{compensated}$ is determined using the difference between objective speech quality assessments SQ(s(t) and SQ(s'(t)). For example, $SQ_{compensated}$ is equal to SQ(s(t) minus SQ(s'(t)), or vice-versa. In another embodiment, speech quality assessment $SQ_{compensated}$ is determined based on a ratio between objective speech quality assessments SQ(s(t) and SQ(s'(t)). For example,

$$SQ_{compensated} = \frac{SQ(s(t))+\mu}{SQ(s'(t))+\mu} \quad \text{or} \quad SQ_{compensated} = \frac{SQ(s'(t))+\mu}{SQ(s(t))+\mu}$$

where $\mu$ is a small constant value.

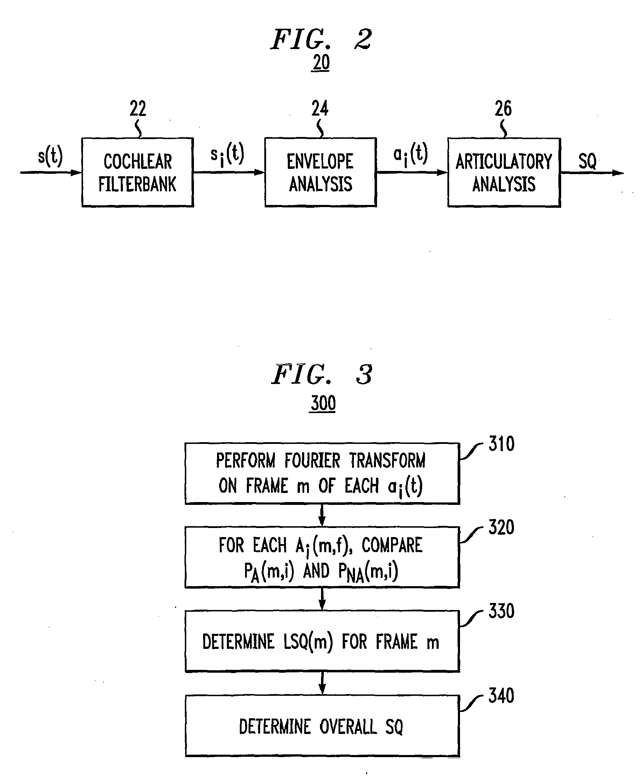

As mentioned earlier, objective speech quality assessment modules 12, 14 are well known in the art. Fig. 2 depicts an embodiment 20 of an objective speech quality assessment module 12, 14 employing an auditory-articulatory analysis module in accordance with the present invention. As shown in Fig. 2, objective quality assessment module 20 comprises of cochlear filterbank 22, envelope analysis module 24 and articulatory analysis module 26. In objective quality assessment module 20, speech signal s(t) is provided as input to cochlear filterbank 22. Cochlear filterbank 22 comprises a plurality of cochlear filters $h_i(t)$ for processing speech signal s(t) in accordance with a first stage of a peripheral auditory system, where $i=1,2,...,N_c$ represents a particular cochlear filter channel and $N_c$ denotes the total number of cochlear filter channels. Specifically, cochlear filterbank 22 filters speech signal s(t) to produce a plurality of critical band signals $s_i(t)$, wherein critical band signal $s_i(t)$ is equal to $s(t)*h_i(t)$.

The plurality of critical band signals $s_i(t)$ is provided as input to envelope analysis module 24. In envelope analysis module 24, the plurality of critical band signals $s_i(t)$ is processed to obtain a plurality of envelopes $a_i(t)$, wherein

$a_i(t)=\sqrt{s_i^2(t)+\hat{s}_i^2(t)}$ and $\hat{s}_i(t)$ is the Hilbert transform of $s_i(t)$.

The plurality of envelopes $a_i(t)$ is then provided as input to articulatory analysis module 26. In articulatory analysis module 26, the plurality of envelopes $a_i(t)$ is processed to obtain a speech quality assessment for speech signal s(t). Specifically, articulatory analysis module 26 does a comparison of the power associated with signals generated from the human articulatory system (hereinafter referred to as "articulation power $P_A(m,i)$") with the power associated with signals not generated from the human articulatory system (hereinafter referred to as "non-articulation power $P_{NA}(m,i)$"). Such comparison is then used to make a speech quality assessment.

Fig. 3 depicts a flowchart 300 for processing, in articulatory analysis module 26, the plurality of envelopes $a_i(t)$ in accordance with one embodiment of the invention. In step 310, Fourier transform is performed on frame m of each of the plurality of envelopes $a_i(t)$ to produce modulation spectrums $A_i(m,f)$, where f is frequency.

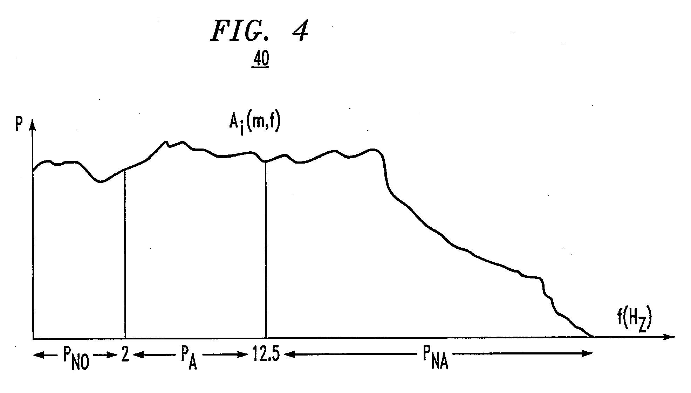

Fig. 4 depicts an example 40 illustrating modulation spectrum $A_i(m,f)$ in terms of power versus frequency. In example 40, articulation power $P_A(m,i)$ is the power associated with frequencies 2~12.5 Hz, and non-articulation power $P_{NA}(m,i)$ is the power associated with frequencies greater than 12.5 Hz. Power $P_{No}(m,i)$ associated with frequencies less than 2 Hz is the DC-component of frame m of critical band signal $a_i(t)$. In this example, articulation power $P_A(m,i)$

is chosen as the power associated with frequencies 2~12.5 Hz based on the fact that the speed of human articulation is 2~12.5 Hz, and the frequency ranges associated with articulation power $P_A(m,i)$ and non-articulation power $P_{NA}(m,i)$ (hereinafter referred to respectively as "articulation frequency range" and "non-articulation frequency range") are adjacent, non-overlapping frequency ranges. It should be understood that, for purposes of this application, the term "articulation power $P_A(m,i)$" should not be limited to the frequency range of human articulation or the aforementioned frequency range 2~12.5 Hz. Likewise, the term "non-articulation power $P_{NA}(m,i)$" should not be limited to frequency ranges greater than the frequency range associated with articulation power $P_A(m,i)$. The non-articulation frequency range may or may not overlap with or be adjacent to the articulation frequency range. The non-articulation frequency range may also include frequencies less than the lowest frequency in the articulation frequency range, such as those associated with the DC-component of frame m of critical band signal $a_i(t)$.

In step 320, for each modulation spectrum $A_i(m,f)$, articulatory analysis module 26 performs a comparison between articulation power $P_A(m,i)$ and non-articulation power $P_{NA}(m,i)$. In this embodiment of articulatory analysis module 26, the comparison between articulation power $P_A(m,i)$ and non-articulation power $P_{NA}(m,i)$ is an articulation-to-non-articulation ratio ANR(m,i). The ANR is defined by the following equation

$$ANR(m,i) = \frac{P_A(m,i) + \varepsilon}{P_{NA}(m,i) + \varepsilon} \qquad \text{equation (1)}$$

where $\varepsilon$ is some small constant value. Other comparisons between articulation power $P_A(m,i)$ and non-articulation power $P_{NA}(m,i)$ are possible. For example, the comparison may be the reciprocal of equation (1), or the comparison may be a difference between articulation power $P_A(m,i)$ and non-articulation power $P_{NA}(m,i)$. For ease of discussion, the embodiment of articulatory analysis module 26 depicted by flowchart 300 will be discussed with respect to the comparison using ANR(m,i) of equation (1). This should not, however, be construed to limit the present invention in any manner.

In step 330, ANR(m,i) is used to determine local speech quality LSQ(m) for frame m. Local speech quality LSQ(m) is determined using an aggregate of the articulation-to-non-articulation ratio ANR(m,i) across all channels i and a weighing factor R(m,i) based on the DC-component power $P_{No}(m,i)$. Specifically, local speech quality LSQ(m) is determined using the following equation

$$LSQ(m) = \log \left[ \sum_{i=1}^{N_c} ANR(m,i)R(m,i) \right] \qquad \text{equation (2)}$$

where

$$R(m,i) = \frac{\log(1 + P_{No}(m,i))}{\sum_{k=1}^{Nc} \log(1 + P_{No}(m,k))} \qquad \text{equation (3)}$$

and k is a frequency index.

In step 340, overall speech quality SQ for speech signal s(t) is determined using local speech quality LSQ(m) and a log power $P_s(m)$ for frame m. Specifically, speech quality SQ is determined using the following equation

$$SQ = L\left\{ P_s(m)LSQ(m) \right\}_{m=1}^{T} = \left[ \sum_{\substack{m=1 \\ P_s > P_{th}}}^{T} P_s^{\lambda}(m)LSQ^{\lambda}(m) \right]^{1/\lambda} \qquad \text{equation (4)}$$

where $P_s(m) = \log\left[\sum_{t\Box m} s^2(t)\right]$, $L$ is $L_p$-norm, T is the total number of frames in speech signal s(t), $\lambda$ is any value, and $P_{th}$ is a threshold for distinguishing between audible signals and silence. In one embodiment, $\lambda$ is preferably an odd integer value.

The output of articulatory analysis module 26 is an assessment of speech quality SQ over all frames m. That is, speech quality SQ is a speech quality assessment for speech signal s(t).

Although the present invention has been described in considerable detail with reference to certain embodiments, other versions are possible. Therefore, the scope of the present invention should not be limited to the description of the embodiments contained herein.

**Claims**

1. A method of assessing speech quality comprising the steps of:

   determining a first and second speech quality assessment for first and second speech quality signals (SQ(s(t)), SQ(s'(t))) based, respectively, on first and second speech signal, the second speech signals being a processed speech signal, and the first speech signal being a distorted (MNRU) version of the second speech signal; and obtaining a compensated speech SQ compensated quality assessment by comparing the first and second speech quality assessments.

2. The method of claim 1 comprising the additional steps of
   prior to determining the first and second speech quality assessments, distorting the second speech signal to produce the first speech signal.

3. The method of claim 1, wherein the first and second speech qualities are assessed using an identical technique for objective speech quality assessment.

4. The method of claim 1, wherein the compensated speech quality assessment corresponds to a difference between the first and second speech qualities.

5. The method of claim 1, wherein the compensated speech quality assessment corresponds to a ratio between the first and second speech qualities.

6. The method of claim 1, wherein the first and second speech qualities are assessed using auditory-articulatory analysis.

7. The method of claim 1, wherein the step assessing the second or first speech quality comprises the steps of;
   comparing articulation power and non-articulation power for the speech signal or distorted speech signal, wherein articulation $P_A$ and non-articulation $P_{NA}$ powers are powers associated with articulation and non-articulation frequencies of the speech signal or distorted speech signal; and
   and assessing the second or first speech quality based on the comparison.

8. The method of claim 7, wherein the articulation frequencies are approximately 2~12.5 Hz.

9. The method of claim 7, wherein the articulation frequencies correspond approximately to a speed of human articulation.

10. The method of claim 7, wherein the non-articulation frequencies are approximately greater than the articulation frequencies.

11. The method of claim 7, wherein the comparison between the articulation power and non-articulation power is a ratio between the articulation power and non-articulation power.

12. The method of claim 10, wherein the ratio includes a denominator and numerator, the numerator including the articulation power and a small constant, the denominator including the non-articulation power plus the small constant.

13. The method of claim 7, wherein the comparison between the articulation power and non-articulation power is a difference between the articulation power and non-articulation power.

14. The method of claim 7, wherein the step of assessing the first or second speech quality includes the step of:

   determining a local speech quality using the comparison.

15. The method of claim 7, wherein the local speech quality is further determined using a weighing factor based on a DC-component power $P_{NO}$.

16. The method of claim 9, wherein the first or second speech quality is determined using the local speech quality.

17. The method of claim 7, wherein the step of comparing articulation power and non-articulation power includes the step of:

   performing a Fourier transform on each of a plurality of envelopes obtained from a plurality of critical band signals.

18. The method of claim 7, wherein the step of comparing articulation power and non-articulation power includes the step of:

   filtering the speech signal to obtain a plurality of critical band signals.

19. The method of claim 18, wherein the step of comparing articulation power and non-articulation power includes the step of:

   performing an envelope analysis on the plurality of critical band signals to obtain a plurality of modulation spectrums.

20. The method of claim 18, wherein the step of comparing articulation power and non-articulation power includes the step of:

   performing a Fourier transform on each of the plurality of modulation spectrums.


**Patentansprüche**

1. Verfahren zur Bewertung der Sprachqualität, die folgenden Schritte umfassend:

   Bestimmen einer ersten und einer zweiten Sprachqualitätsbewertung für erste und zweite Sprachqualitätssignale, jeweils ein (SQ(s(t), SQ(s'(t))-basiertes erstes und zweites Sprachsignal, wobei das zweite Sprachsignal ein verarbeitetes Sprachsignal ist und das erste Sprachsignal eine verzerrte (MNRU)-Version des zweiten Sprachsignals ist; und
   Gewinnen einer SQ-kompensierten Sprachqualitätsbewertung durch Vergleichen der ersten und der zweiten Sprachqualitätsbewertungen.

2. Verfahren nach Anspruch 1, den folgenden zusätzlichen Schritt umfassend:

   Vor Bestimmen der ersten und zweiten Sprachqualitätsbewertungen, Verzerren des zweiten Sprachsignals, um das erste Sprachsignal zu erzeugen.

3. Verfahren nach Anspruch 1, wobei die erste und die zweite Sprachqualität unter Verwendung einer identischen Technik für objektive Sprachqualitätsbewertung bewertet werden.

4. Verfahren nach Anspruch 1, wobei die kompensierte Sprachqualitätsbewertung einer Differenz zwischen der ersten und der zweiten Sprachqualität entspricht.

5. Verfahren nach Anspruch 1, wobei die kompensierte Sprachqualitätsbewertung einem Verhältnis zwischen der ersten und der zweiten Sprachqualität entspricht.

6. Verfahren nach Anspruch 1, wobei die erste und die zweite Sprachqualität unter Verwendung einer auditorisch-artikulatorischen Analyse bewertet werden.

7. Verfahren nach Anspruch 1, wobei der Schritt des Bewertens der zweiten und der ersten Sprachqualität die folgenden Schritte umfasst:

Vergleichen der Lautbildungsleistung und der Nicht-Lautbildungsleistung für das Sprachsignal oder das verzerrte Sprachsignal, wobei die Lautbildungs- ($P_A$) und die Nicht-Lautbildungs- ($P_{NA}$)-Leistungen mit Lautbildungs- und Nicht-Lautbildungsfrequenzen des Sprachsignals oder des verzerrten Sprachsignals assoziiert werden; und
Bewerten der zweiten oder der ersten Sprachqualität auf der Basis des Vergleichs.

8. Verfahren nach Anspruch 7, wobei die Lautbildungsfrequenzen im Bereich von ca. 2 ~ 12.5 Hz liegen.

9. Verfahren nach Anspruch 7, wobei die Lautbildungsfrequenzen in etwa der Geschwindigkeit der menschlichen Lautbildung entsprechen.

10. Verfahren nach Anspruch 7, wobei die Nicht-Lautbildungsfrequenzen in etwa höher als die Lautbildungsfrequenzen sind.

11. Verfahren nach Anspruch 7, wobei der Vergleich der Lautbildungsleistung und der Nicht-Lautbildungsleistung ein Verhältnis zwischen der Lautbildungsleistung und der Nicht-Lautbildungsleistung ist.

12. Verfahren nach Anspruch 10, wobei das Verhältnis einen Nenner und einen Zähler umfasst, wobei der Zähler die Lautbildungsleistung und eine kleine Konstante einschließt, und wobei der Nenner die Nicht-Lautbildungsleistung plus die kleine Konstante einschließt.

13. Verfahren nach Anspruch 7, wobei der Vergleich zwischen der Lautbildungsleistung und der Nicht-Lautbildungsleistung eine Differenz zwischen der Lautbildungsleistung und der Nicht-Lautbildungsleistung ist.

14. Verfahren nach Anspruch 7, wobei der Schritt des Bewertens der ersten oder der zweiten Sprachqualität den folgenden Schritt umfasst:

Bestimmen einer lokalen Sprachqualität und Verwendung des Vergleichs.

15. Verfahren nach Anspruch 7, wobei die lokale Sprachqualität weiterhin unter Verwendung eines Gewichtungsfaktors auf der Basis einer Gleichstromkomponente-Leistung ($P_{NO}$) bestimmt wird.

16. Verfahren nach Anspruch 9, wobei die erste oder die zweite Sprachqualität unter Verwendung der lokalen Sprachqualität bestimmt wird.

17. Verfahren nach Anspruch 7, wobei der Schritt des Vergleichens der Lautbildungsleistung und der Nicht-Lautbildungsleistung den folgenden Schritt umfasst:

Durchführen einer Fourier-Transformation auf einer jeden der Vielzahl von aus einer Vielzahl von Signalen kritischer Bänder gewonnenen Hüllkurven.

18. Verfahren nach Anspruch 7, wobei der Schritt des Vergleichens der Lautbildungsleistung und der Nicht-Lautbildungsleistung den folgenden Schritt umfasst:

Filtern des Sprachsignals, um eine Vielzahl von Signalen kritischer Bänder zu erhalten.

19. Verfahren nach Anspruch 18, wobei der Schritt des Vergleichens der Lautbildungsleistung und der Nicht-Lautbildungsleistung den folgenden Schritt umfasst:

Durchführen einer Hüllkurvenanalyse auf der Vielzahl von Signalen kritischer Bänder, um eine Vielzahl von Modulationsspektren zu erhalten.

**20.** Verfahren nach Anspruch 18, wobei der Schritt des Vergleichens der Lautbildungsleistung und der Nicht-Lautbildungsleistung den folgenden Schritt umfasst:

Durchführen einer Fourier-Transformation auf einem jeden der Vielzahl von Modulationsspektren.

**Revendications**

**1.** Procédé d'évaluation de la qualité vocale, comprenant les étapes suivantes :

déterminer une première et une deuxième évaluations de la qualité vocale pour des premier et deuxième signaux de qualité vocale (SQ(s(t)), SQ(s'(t))) sur la base, respectivement, de premier et deuxième signaux vocaux, le deuxième signal vocal étant un signal vocal traité, et le premier signal vocal étant une version déformée (MNRU) du deuxième signal vocal ; et
obtenir une évaluation de la qualité vocale SQ compensée en comparant la première et la deuxième évaluations de la qualité vocale.

**2.** Procédé selon la revendication 1 comprenant les étapes supplémentaires suivantes
avant de déterminer la première et la deuxième évaluations de la qualité vocale, déformer le deuxième signal vocal pour produire le premier signal vocal.

**3.** Procédé selon la revendication 1, dans lequel la première et la deuxième qualités vocales sont évaluées en utilisant une technique identique pour l'évaluation objective de la qualité vocale.

**4.** Procédé selon la revendication 1, dans lequel l'évaluation de la qualité vocale compensée correspond à une différence entre la première et la deuxième qualités vocales.

**5.** Procédé selon la revendication 1, dans lequel l'évaluation de la qualité vocale compensée correspond à un rapport entre la première et la deuxième qualités vocales.

**6.** Procédé selon la revendication 1, dans lequel la première et la deuxième qualités vocales sont évaluées en utilisant une analyse articulatoire d'audition.

**7.** Procédé selon la revendication 1, dans lequel l'étape d'évaluation de la deuxième ou de la première qualité vocale comprend les étapes suivantes ;
comparer la puissance d'articulation et la puissance de non-articulation pour le signal vocal ou le signal vocal déformé, dans lequel les puissances d'articulation $P_A$ et de non-articulation $P_{NA}$ sont des puissances associées aux fréquences d'articulation et de non-articulation du signal vocal ou du signal vocal déformé ; et
évaluer la deuxième ou la première qualité vocale sur la base de la comparaison.

**8.** Procédé selon la revendication 7 ; dans lequel les fréquences d'articulation sont environ comprises entre 2 et 12,5 Hz.

**9.** Procédé selon la revendication 7, dans lequel les fréquences d'articulation correspondent environ à une vitesse de l'articulation humaine.

**10.** Procédé selon la revendication 7, dans lequel les fréquences de non-articulation sont environ supérieures aux fréquences d'articulation.

**11.** Procédé selon la revendication 7, dans lequel la comparaison entre la puissance d'articulation et la puissance de non-articulation est un rapport entre la puissance d'articulation et la puissance de non-articulation.

**12.** Procédé selon la revendication 10, dans lequel le rapport comprend un dénominateur et un numérateur, le numérateur comprenant la puissance d'articulation et une faible constante, le dénominateur comprenant la puissance de non-articulation plus la faible constante.

**13.** Procédé selon la revendication 7, dans lequel la comparaison entre la puissance d'articulation et la puissance de non-articulation est une différence entre la puissance d'articulation et la puissance de non-articulation.

**14.** Procédé selon la revendication 7, dans lequel l'étape d'évaluation de la première ou de la deuxième qualité vocale comprend l'étape suivante :

déterminer une qualité vocale locale en utilisant la comparaison.

**15.** Procédé selon la revendication 7, dans lequel la qualité vocale locale est en outre déterminée en utilisant un facteur de pondération sur la base d'une puissance de composante CC $P_{NO}$.

**16.** Procédé selon la revendication 9, dans lequel la première ou la deuxième qualité vocale est déterminée en utilisant la qualité vocale locale.

**17.** Procédé selon la revendication 7, dans lequel l'étape de comparaison de la puissance d'articulation et de la puissance de non-articulation comprend l'étape suivante :

effectuer une transformation de Fourier sur chaque enveloppe parmi une pluralité d'enveloppes obtenues à partir d'une pluralité de signaux de bande critique.

**18.** Procédé selon la revendication 7, dans lequel l'étape de comparaison de la puissance d'articulation et de la puissance de non-articulation comprend l'étape suivante :

filtrer le signal vocal pour obtenir une pluralité de signaux de bande critique.

**19.** Procédé selon la revendication 18, dans lequel l'étape de comparaison de la puissance d'articulation et de la puissance de non-articulation comprend l'étape suivante :

effectuer une analyse d'enveloppes sur la pluralité de signaux de bande critique pour obtenir une pluralité de spectres de modulation.

**20.** Procédé selon la revendication 18, dans lequel l'étape de comparaison de la puissance d'articulation et de la puissance de non-articulation comprend l'étape suivante :

effectuer une transformation de Fourier sur chaque spectre parmi la pluralité de spectres de modulation.

## FIG. 1

<u>10</u>

## *FIG. 2*

<u>20</u>

$s(t) \rightarrow$ | 22 | COCHLEAR FILTERBANK | $\xrightarrow{s_i(t)}$ | 24 | ENVELOPE ANALYSIS | $\xrightarrow{a_i(t)}$ | 26 | ARTICULATORY ANALYSIS | $\xrightarrow{SQ}$

## *FIG. 3*

<u>300</u>

| 310 PERFORM FOURIER TRANSFORM ON FRAME m OF EACH $a_i(t)$ |
| 320 FOR EACH $A_i(m,f)$, COMPARE $P_A(m,i)$ AND $P_{NA}(m,i)$ |
| 330 DETERMINE LSQ(m) FOR FRAME m |
| 340 DETERMINE OVERALL SQ |

## FIG. 4

### 40

**EP 1 518 096 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1187100 A1
- US 4352182 A